# EUROPÄISCHE PATENTANMELDUNG

(11) **EP 3 373 181 A1**
(43) Veröffentlichungstag der Anmeldung: **12.09.2018**
(21) Anmeldenummer: 17160157.8
(22) Anmeldetag: 09.03.2017
(51) Int. Cl.: G06F 21/56

(54) **VERFAHREN UND COMPUTER ZUR STEUERUNG VON SCHUTZMASSNAHMEN GEGEN CYBERKRIMINELLE BEDROHUNGEN**

(71) Anmelder: Siemens Aktiengesellschaft, 80333 München (DE)
(72) Erfinder: VERMA, Amit, 91058 Erlangen (DE); BAUER, Jörg, 91080 Uttenreuth (DE); KISSLING, Jan, 76676 Graben-Neudorf (DE)

(57) **Zusammenfassung**

Die Erfindung betrifft ein Verfahren und einen Computer (ICS1, ..., ICS3) zur Steuerung, insbesondere einer Komponente einer industriellen Automatisierungsanordnung, gegen Sicherheitsrisiken vorgeschlagen, wobei eine Anzahl Schutzmaßnahmen zum Schutz gegen Angriffe, insbesondere gegen Computerviren und andere cyberkriminelle Bedrohungen, verfügbar sind. Dabei sind die verfügbaren Schutzmaßnahmen einer Anzahl von Sicherheitsprofilen zugeordnet, wobei vorzugsweise zumindest zwischen einem niedrigen Sicherheitsprofil mit wenig aufwändigen Schutzmaßnahmen und einem hohen Sicherheitsprofil mit aufwändigeren Schutzmaßnahmen unterschieden wird, wobei für den Computer (ICS1, ..., ICS3) ein Maß für eine cyberkriminelle Bedrohung ermittelt wird, wobei anhand des ermittelten Maßes zumindest eines der Sicherheitsprofile ausgewählt wird, und wobei die dem ausgewählten Sicherheitsprofil zugeordneten Schutzmaßnahmen auf den Computer (ICS1, ..., ICS3) angewendet werden. Durch dieses Verfahren ist es möglich, die anzuwendenden Schutzmaßnahmen jeweils anhand der derzeitigen cyberkriminellen Bedrohungslage einzustellen, so dass stets ein optimaler Schutz des Computers (ICS1, ..., ICS3) gegeben ist.

## Beschreibung

Die Erfindung betrifft ein Verfahren zur Steuerung von Schutzmaßnahmen eines Computers gemäß dem Oberbegriff des Patentanspruchs 1, und einen Computer mit Schutzmaßnahmen gegen cyberkriminelle Bedrohungen gemäß dem Oberbegriff des Patentanspruchs 8.

Computer aller Art, die mit einem Datennetz und hierbei insbesondere mit dem Internet verbunden sind, sind gebräuchlicher Weise mit Schutzmaßnahmen gegen cyberkriminelle Bedrohungen ausgerüstet. Cyberkriminelle Bedrohungen sind in vielfacher Ausprägung bekannt, insbesondere als Computerviren, Computerwürmer, Trojanische Pferde, Backdoors ("Hintertüren"), Spyware, Scareware, Ransomware etc. Oft werden diese verschiedenen Bedrohungen auch unter dem Oberbegriff "Malware" zusammengefasst, womit in weiterem Sinne auch Angriffe gemeint sind, die nicht von einer unerwünscht auf einem Computer ausgeführten Software ausgehen, sondern "von außen" auf ein datentechnisches Gerät einwirken, beispielsweise als DDoS-Attacke (Distributed Denial of Service-Angriff) o.ä. Kennzeichnend dafür ist auch, dass die Bedrohung durch solche Schädlinge äußerst dynamisch ist, was bedeutet, dass zum einen täglich neue und zuvor unbekannte Bedrohungen auftreten, und zum anderen bestimmte Angriffe auch als "Wellen" in zeitlicher Konzentration auftreten.

Folglich kommt heutzutage kein Gerät, welches mit dem Internet verbunden ist, ohne eine "Firewall" oder einen "Virenscanner" aus.

In den industriellen Automatisierungsanordnungen sind die dort verwendeten datentechnischen Einrichtungen, insbesondere die speicherprogrammierbaren Steuerungen, in den ersten Produktgenerationen nicht mit dem Internet verbunden gewesen, also sozusagen in einem datentechnischen Inselbetrieb betrieben worden, so dass für Bedrohungen "von außen" nur wenige oder keine Schutzmaßnahmen vorgesehen waren; lediglich lokale Schutzmaßnahmen wie Zugriffsschutz mittels Passwörtern etc. war vorgesehen. Mit der breiten Einführung von vernetzten Automatisierungssystemen, dem Internet der Dinge (Industrial Internet of Things - IIoT), was oft auch unter dem Oberbegriff "Industrie 4.0" zusammengefasst wird, sind auch die industriellen Automatisierungsanordnungen (ICS - Industrial Control Systems) zunehmend cyberkriminellen Bedrohungen ausgesetzt. Folglich werden auch für die industriellen Komponenten Schutzmaßnahmen gegen solche Bedrohungen vorgesehen.

Typischerweise geht der vermehrte Einsatz von Schutzmaßnahmen, der die Sicherheit gegen cyberkriminelle Bedrohungen bzw. "Malware" erhöht, zu Lasten einer Leistungsfähigkeit (Performance) und einem Bedienkomfort (usability) eines Computers allgemein und eines industriellen Automatisierungssystems insbesondere. Dies führt dazu, dass die Schutzmaßnahmen, die für einen Computer im industriellen Umfeld vorgesehen werden, immer einen Kompromiss zwischen einem Risikoschutz (security level) einerseits und einer Anwendbarkeit (Performance, usability) andererseits darstellen.

Nachteilig daran ist, dass in Folge des zu wählenden Kompromisses oft weder die Performance noch die Sicherheit optimal eingestellt sind.

Das Problem wurde in der Vergangenheit oft dadurch gelöst, dass aufwändige Maßnahmen, beispielsweise das Update von Anti-Virus-Signaturen, das Update von Heuristischen Regeln zur Erkennung von Bedrohungen, die Einschränkung von Ports einer Firewall und andere Maßnahmen manuell gesteuert und erst dann vorgenommen wurden, wenn beispielsweise durch Medien oder andere Meldungen eine besondere Bedrohung bekannt geworden war.

Ein solcher Ansatz ist jedoch nur reaktiv, d.h., dass oft erst lange nach Beobachtung und Registrierung einer konkreten Bedrohung oder eines konkreten Angriffs bestimmte Maßnahmen ergriffen worden sind.

Es ist also eine Aufgabe der vorliegenden Erfindung, die auf einen Computer anzuwendenden Schutzmaßnahmen gegen cyberkriminelle Bedrohungen schneller und einfacher und zielgenau auszuwählen.

Es ist eine Kernidee der erfindungsgemäßen Lösung des Problems, für einen Computer und dabei insbesondere für eine Komponente einer industriellen Automatisierungsanordnung (ICS) eine Anzahl von Sicherheitsprofilen zu verwalten, wobei die Sicherheitsprofile jeweils unterschiedliche Schutzmaßnahmen gegen cyberkriminelle Bedrohungen umfassen und wobei erfindungsgemäß die Anwendung der Sicherheitsprofile und damit die Auswahl der jeweils anzuwendenden Schutzmaßnahmen dynamisch an ein aktuelles Maß, insbesondere ein Domänen-spezifisches Maß für eine jeweils aktuelle cyberkriminelle Bedrohung bzw. Bedrohungslage geknüpft ist.

Die Aufgabe wird insbesondere durch ein Verfahren gemäß dem Patentanspruch 1 und durch einen Computer gemäß dem Patentanspruch 8 gelöst.

Dabei wird ein Verfahren zur Steuerung von Schutzmaßnahmen eines Computers, insbesondere einer Komponente einer industriellen Automatisierungsanordnung, gegen Sicherheitsrisiken vorgeschlagen, wobei eine Anzahl Schutzmaßnahmen zum Schutz gegen Angriffe, insbesondere gegen Computerviren und andere cyberkriminelle Bedrohungen, verfügbar sind. Dabei sind die verfügbaren Schutzmaßnahmen einer Anzahl von Sicherheitsprofilen zugeordnet, wobei vorzugsweise zumindest zwischen einem niedrigen Sicherheitsprofil mit wenig aufwändigen Schutzmaßnahmen und einem hohen Sicherheitsprofil mit aufwändigeren Schutzmaßnahmen unterschieden wird, wobei für den Computer ein Maß für eine cyberkriminelle Bedrohung ermittelt wird, wobei anhand des ermittelten Maßes zumindest eines der Sicherheitsprofile ausgewählt wird, und wobei die dem ausgewählten Sicherheitsprofil zugeordneten Schutzmaßnahmen auf den Computer angewendet werden. Durch dieses Verfahren ist es möglich, die anzuwendenden Schutzmaßnahmen jeweils anhand der derzeitigen cyberkriminellen Bedrohungslage einzustellen, so dass stets ein optimaler Schutz des Computers gegeben ist.

Die Aufgabe wird außerdem gelöst durch einen Computer, insbesondere einer Komponente einer industriellen Automatisierungsanordnung, mit einer Anzahl verfügbarer Schutzmaßnahmen gegen Sicherheitsrisiken, insbesondere gegen Computerviren und andere cyberkriminelle Bedrohungen. Dabei sind die verfügbaren Schutzmaßnahmen einer Anzahl von Sicherheitsprofilen zugeordnet, wobei der Computer zur Berücksichtigung eines Maßes für eine cyberkriminelle Bedrohung eingerichtet ist, wobei der Computer dazu eingerichtet ist, anhand des Maßes für die cyberkriminelle Bedrohung zumindest eines der Sicherheitsprofile auszuwählen, wobei vorzugsweise zumindest zwei verschiedene Sicherheitsprofile vorgesehen sind, und wobei zumindest zwischen einem niedrigen Sicherheitsprofil mit weniger aufwändigen Schutzmaßnahmen und einem höheren Sicherheitsprofil mit aufwändigeren Schutzmaßnahmen unterschieden wird, und wobei der Computer zur Anwendung der dem jeweils ausgewählten Sicherheitsprofil zugeordneten Schutzmaßnahmen eingerichtet ist. Ein derart ausgestatteter Computer weist hinsichtlich seines Schutzes gegen cyberkriminelle Bedrohungen dieselben Vorteile auf, die schon anhand des Verfahrens beschrieben worden sind.

Vorteilhafte Ausgestaltungen des erfindungsgemäßen Verfahrens sind in den abhängigen Patentansprüchen angegeben. Die dabei beschriebenen Merkmale und deren Vorteile gelten sinngemäß auch für einen erfindungsgemäßen Computer. Die unterschiedlichen Ausgestaltungen können sowohl einzeln als auch in Kombination miteinander realisiert werden.

In einer Ausgestaltung wird das Maß für die cyberkriminelle Bedrohung bzw. Bedrohungslage durch zumindest einen Wert beschrieben, vorteilhaft jedoch durch eine Anzahl von Werten bzw. ein sogenanntes "Szenario", einen Vektor oder eine Matrix oder dgl. Dabei sind vorteilhaft einzelne Werte oder Indikatoren unterschiedlichen Arten von Schädlingen oder Bedrohungen zugeordnet, wobei in einer besonders vorteilhaften Ausgestaltung die verfügbaren Schutzmaßnahmen jeweils auch den unterschiedlichen Indikatoren bzw. Typen oder Arten von Bedrohungen zugeordnet sind.

Die Sicherheitsprofile können sich hinsichtlich des mit Ihrer Anwendung verbundenen Aufwandes unterscheiden. Das können insbesondere Unterschiede in der Ressourcenbelastung des ausführenden Computers sein, womit sich Einschränkungen in der Performance auszuführender Anwendungen ergeben können. Auch Zugriffsbeschränkungen oder Blockaden von ausführbaren Dateien und Funktionen oder andere Einschränkungen, die sich in Folge erhöhter Sicherheitsmaßnahmen ergeben können, zählen zu dem Aufwand. Regelmäßig geht ein höherer Sicherheitslevel auch mit erhöhten Einschränkungen in Funktion oder Komfort einher. In einer vorteilhaften Ausgestaltung kann zu jedem Sicherheitsprofil ein Datensatz über die damit einhergehenden Aufwände, z.B. Konsum von Rechenzeit oder Stilllegung von Funktionalität, vorliegen, so dass entscheiden werden kann, ob die Anwendung eines bestimmten Sicherheitsprofil zum gegebenen Zeitpunkt akzeptabel ist. Vorteilhaft kann in einer Benutzeroberfläche, z.B. einem sog. Security-Dialog, ein Benutzer entsprechend informiert werden und Eingriffe in die entsprechenden Einstellungen vornehmen, sofern dem Benutzer dafür Berechtigungen eingeräumt sind.

Verschiedene Sicherheitsprofile können auch auf verschiedene Arten oder Ausprägungen von Bedrohungen zugeschnitten sein, beispielsweise ein spezielles Sicherheitsprofil gegen Portangriffe aus dem Internet und ein anderes gegen Computerviren oder dergleichen. Folglich kann aus der Bedrohungslage heraus auch eine Mehrzahl unterschiedlicher Sicherheitsprofile gleichzeitig angewendet bzw. aktiviert werden.

Es können auch bestimmte Schutzmaßnahmen mehreren Sicherheitsprofilen zugeordnet sein, so dass sich deren Schutzbereich überschneidet; das ist besonders in solchen Ausgestaltungen sinnvoll, in denen immer nur ein Sicherheitsprofil zur gleichen Zeit für eine Maschine oder einen Computer aktiviert sein soll. Diese Ausgestaltung bietet Vorteile insbesondere in den Fällen, in denen für das Maß der Bedrohung nur wenige Werte oder gar nur ein Wert zur Verfügung stehen, was zum Beispiel dann der Fall ist, wenn der Dienst zwar in einem Netzwerk vermehrt Fehlfunktionen feststellt, aber die genaue Ursache noch nicht identifiziert ist. In einem solchen Fall würde dann beispielsweise zunächst vorsichtshalber ein "hohes" Sicherheitsprofil, welches viele Schutzmaßnahmen gegen eine Vielzahl unterschiedlicher Arten von Schädlingen vorsieht, angewendet, bis dann die Art des Angriffs analysiert ist und ein anderes Sicherheitsprofil ausgewählt werden kann, welches spezifisch auf die vorliegende Bedrohung angepasst ist.

Die Anzahl und die Organisation der Sicherheitsprofile bzw. der diesen jeweils zugeordneten Schutzmaßnahmen ist somit immer ein Kompromiss zwischen Granularität und Handhabbarkeit. Die Sicherheitsprofile können auch nach Art eines hierarchischen Baumes organisiert sein, so dass mit Aktvierung eines höher positionierten Profils die diesem untergeordneten Profile und deren zugeordnete Schutzmaßnahmen automatisch mit ausgewählt bzw. angewendet werden. Bei einander widersprechenden Maßnahmen kann automatisch diejenige aus der im Vergleich höheren Hierarchieebene zur Anwendung kommen.

Obwohl ein Maß, also ein Wert oder eine Summe von Werten für eine Bedrohungslage oder ein Risiko auch von einer Komponente eines zu schützenden Computers selbst, also lokal bestimmt und zur Verfügung gestellt werden kann, wird in einer vorteilhaften Ausgestaltung die aktuelle cyberkriminelle Bedrohung bzw. Bedrohungslage und Maße bzw. Werte für die einzelnen Arten der Bedrohung von einem zentralen Dienst oder einer Anzahl von Diensten zur Verfügung gestellt, wobei diese Dienste auch lokale oder Domänen-spezifische Drohungen quantifizieren können, also beispielsweise Bedrohungen speziell für industrielle Anordnungen, geografisch begrenzte Bedrohungen, oder gemäß anderer Differenzierungen. Ein solcher Dienst kann die Funktionalität bzw. das "Verhalten" anderer Komponenten oder Kenngrößen (z.B. Netzwerk-Traffic in Bezug auf bestimmte IP-Ports) eines Netzwerkes beobachten und somit das Auftreten von vermutlich auf cyberkriminelle Angriffe zurückzuführende Veränderungen automatisch feststellen und als Reaktion automatisch die Auswahl und Anwendung eines geeigneten Sicherheitsprofils initiieren.

In einer weiteren vorteilhaften Ausgestaltung können solche Dienste auch zugleich die Schutzmaßnahmen "zum Download" bereithalten, also beispielsweise Antiviren-Programme und Signaturen für Antiviren-Programme, Parameter für Firewalls, Heuristische Regeln zur Erfassung von neuen, bislang unbekannten Bedrohungen etc. Vorteilhaft werden von solchen zentralen Diensten auch die Sicherheitsprofile selbst in stets aktualisierter Form bereitgestellt.

Während es grundsätzlich möglich ist, dass ein Computer aktiv bei einem Dienst oder einer Anzahl von Diensten ein Maß bzw. Werte für die cyberkriminelle Bedrohungslage abruft, ist es besonders vorteilhaft möglich, dass ein Computer entsprechende Meldungen abonniert und mittels eines Benachrichtigungsverfahrens, beispielsweise eines sogenannten "Push"-Verfahrens, über Änderungen der Bedrohungslage informiert wird. Sofern mehrere Datenquellen bzw. Dienste zur Verfügung stehen, kann ein Computer eine Einrichtung, insbesondere eine Software, beinhalten, wobei diese Einrichtung oder Software aus verschiedenen Werten oder Indizes für cyberkriminelle Bedrohungen ein gemäß des eigenen Anwendungsprofils (Funktion, Ort, Ausstattung, "Environment" etc.) angepasstes Maß bzw. Wert für die cyberkriminelle Bedrohung errechnen und daraus das oder die anzuwendende(n) Sicherheitsprofil(e) auswählen. Dabei kann in einer vorteilhaften Ausgestaltung auch die aktuelle Auslastung des Computers berücksichtigt werden, so dass in dem Falle, in dem viele freie Ressourcen, insbesondere Rechenleistung, verfügbar sind, ein eher strengeres bzw. hinsichtlich Ressourcenbedarf etc. aufwendigeres Sicherheitsprofil angewendet wird, welches dann diese freien Ressourcen ausnutzt, während bei einer starken Auslastung der Maschine ein weniger aufwändiges Sicherheitsprofil ausgewählt wird, welches eben nur ein Mindestmaß an Schutzmaßnahamen beinhaltet, dafür aber die Ressourcen der Maschine nicht in unzumutbarer Weise belastet.

Ein Computer kann dazu auch so eingestellt sein, dass bei längerem Ausbleiben von Informationen über das Maß einer derzeitigen Bedrohung oder über anzuwendende Sicherheitsprofile automatisch ein bestimmtes, in der Regel "hohes", Sicherheitsprofil angewendet wird.

Ein Ausführungsbeispiel für das erfindungsgemäße Verfahren wird nachfolgend anhand der Zeichnung erläutert. Das Ausführungsbeispiel dient gleichzeitig der Erläuterung eines erfindungsgemäßen Computers.

Dabei zeigen:
- Figur 1: in schematischer Darstellung eine Domäne mit einer industriellen Automatisierungsanordnung mit mehreren Computern und einem zentralen Dienst zur Bereitstellung von Informationen über eine cyberkriminelle Bedrohungslage, und
- Figur 2: ein Bespiel einer Konfigurierungsdatei, in der zwei Sicherheitsprofile definiert sind.

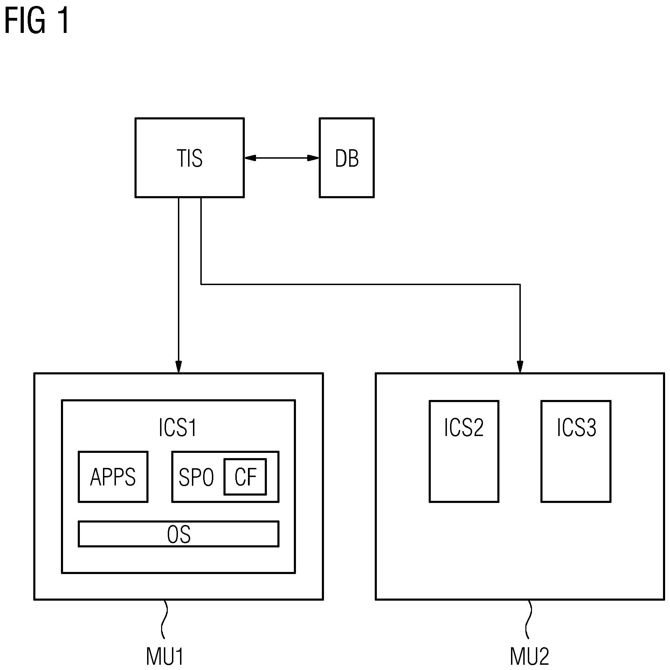

In der Figur 1 ist exemplarisch für eine industrielle Automatisierungsanordnung schematisch eine Anordnung aus zwei Arbeitsstationen MU1, MU2 ("Manufacturing Units") gezeigt, wobei in Summe drei Computer ICS1, ICS2, ICS3 (Industrial Control Systems) betrieben werden; die Computer ICS1, ..., ICS3 sind also beispielsweise speicherprogrammierbare Steuerungen (PLC - Programmable Logis Controller), Bedien- und Beobachtungsgeräte (HMI - Human Machine Interfaces) oder dergleichen.

Jeder Computer ICS1, ..., ICS3 umfasst neben seiner Hardware verschiedene Software-Bausteine, insbesondere ein Betriebssystem OS (Operation System), verschiedene Anwendungen APPS (Applications), ein Modul SPO (Security Profile Orchestrator) zur Steuerung von Schutzmaßnahmen, wobei das letztgenannte Modul SPO eine Datenbank CF (Configuration Files) umfasst, wobei diese Datenbank CF der Verwaltung von Sicherheitsprofilen und der ggf. jeweils zugeordneten Schutzmaßnahmen ermöglicht.

Die Arbeitsstationen MU1, MU2 bzw. die darin betriebenen Computer ICS1, ..., ICS3 sind über ein (nicht dargestelltes) Datennetzwerk miteinander verbunden. Über das Datennetzwerk können die gezeigten Komponenten auch mit einem Dienst TIS (Threat Indicator Service) Daten austauschen; der Dienst TIS hat ebenfalls Zugriff auf eine eigene Datenbank DB, die beispielsweise Konfigurationen der Sicherheitsprofile bereitstellen kann und Programme und Daten für Schutzmaßnahmen zum Abruf bereithalten kann.

Abweichend von in der Figur 1 dargestellten Konstellation können der Dienst TIS oder auch nur Teile davon als eine Software-Komponente auf einem der Computer ICS1, ..., ICS3 ablaufen oder im Gegensatz dazu auch gar nicht Bestandteil der hier gezeigten Domäne sein, sondern beispielsweise ein im Internet abonnierbarer Dienst oder der Dienst einer nationalen Sicherheitsbehörde zur Verfügung gestellt sein, oder dergleichen. Ebenso können auch Teile des Moduls SPO und auch die Datenbank CF auf einer anderen Komponente, beispielsweise einem zentralen Server, installiert sein, wobei jedoch die Computer ICS1, ..., ICS3 soweit ausgestattet sein müssen, dass die Schutzmaßnahmen eines ausgewählten Sicherheitsprofils angewendet werden können.

Das Modul SPO ist also derart eingerichtet, dass für den jeweiligen Computer - im vorliegenden Ausführungsbeispiel soll sich auf den dargestellten Computer ICS1 konzentriert werden - ein Sicherheitsprofil aktiviert wird, welches von einem Maß für eine Bedrohung (Bedrohungslage oder Bedrohungslevel) für die betrachtete Domäne, also die hier gezeigte Automatisierungsanordnung, abhängt. Das Maß für die cyberkriminelle Bedrohung, auch "Indikator" genannt, soll im vorliegenden einfachen Ausführungsbeispiel ein dreistufiger Indikator sein, mit den Stufen 1, 2, 3 (geringe Bedrohung, mittlere Bedrohung, hohe Bedrohung). Die Berechnung dieses Indikators ist in diesem Fall domänenspezifisch, spiegelt also eine mehr oder weniger eingegrenzte lokale Situation wieder. In anderen Beispielen kann auch eine globale Lage zugrundegelegt werden. Die vorliegende domänenspezifische Bewertung der cyberkriminellen Bedrohungslage kann also beispielsweise speziell für industrielle Automatisierungsanordnungen oder sogar speziell für Automatisierungsanordnungen für bestimmte Branchen oder für bestimmte geografische Regionen kalkuliert sein. Das Maß bzw. der Index für die Bedrohungslage kann durch bereits beobachtete oder auch nur anhand erwarteter Angriffe in der betrachteten Domäne ermittelt werden. Der Dienst zur Bereitstellung eines Maßes oder entsprechender Indizes kann beispielsweise auch als ein sogenannter "Cloud Service" realisiert sein und die Computer ICS1, ..., ICS3 oder andere Komponenten im "Feld" können diesen Dienst abonnieren ("Subcription"). Natürlich gehören zu einer solchen Nutzung eines Dienstes auch entsprechende Authentifizierungs- und Autorisierungsmechanismen und andere Maßnahmen, die die Integrität und die Verfügbarkeit des Dienstes bzw. der abonnierten Werte sicherstellen.

Abonnenten dieses Dienstes bzw. der zur Verfügung gestellten Werte und Indizes und Maße sind im vorliegenden Ausführungsbeispiel Steuerungseinheiten, Programmiergeräte, Antriebseinheiten und dergleichen im industriellen Umfeld. Jedoch können auch dedizierte Sicherheitsgeräte und Sicherheitseinrichtungen wie z. B. industrielle Firewalls und andere Netzwerkkomponenten in der erfinderischen Weise hinsichtlich der zu ergreifenden Schutzmaßnahmen gesteuert werden. Weiterhin können auch selbstverständlich mobile Geräte (Smartphone, Tablet-PC etc.) in das erfinderische Verfahren eingebunden werden.

Wie bereits erwähnt, sind eine Vielzahl verschiedener Schutzmaßnahmen verfügbar, die auf eine Anzahl von Sicherheitsprofilen oder Sicherheitsstufen abgebildet sind, die wiederum durch ein jeweiliges Maß einer cyberkriminellen Bedrohung ausgewählt werden. Als Beispiel für ein zu schützendes System bzw. einen zu schützenden Computer ICS1, ..., ICS3 kann ein industrieller Router und industrielle Firewalls für ein Industrielles Datennetzwerk betrachtet werden, wobei im einfachsten Fall zwischen einem niedrigen und einem hohen Sicherheitsprofil unterschieden werden kann. In diesem Beispiel könnte das niedrigere Sicherheitsprofil bewirkten, dass bei dessen Anwendung ein Antivirus-Programm in einem normalen Betriebsmodus arbeitet, also mit einem normalen "packet scanning". Dieses Sicherheitsprofil ist mit einer vergleichsweise hohen Performance (Datendurchsatz) verbunden und ist vergleichsweise einfach zu handhaben, was beispielsweise bedeutet, dass die sogenannten "false positives", also die irrtümlich als infiziert identifizierten Dateien oder Datenpakete, vergleichsweise selten sind. Weiterhin könnte diesem Sicherheitsprofil zu eigen sein, dass die Anzahl der aufzuzeichnenden Daten, der sogenannte "log level", sich auf einer niedrigen Basiseinstellung befindet. In einem hohen Sicherheitsprofil werden viel mehr Daten aufgezeichnet, beispielsweise durch ein sogenanntes "session tracking". Für den Virenscanner und die Firewall würde es gleichzeitig bedeuten, dass die Datenpakete bzw. Dateien detaillierter untersucht werden ("deep-packet inspection"), dass höhere Restriktionen für eingehenden Datenverkehr für die Firewall eingestellt werden, dass Heuristische Analysen für die Identifizierung von Schadprogrammen angewendet werden, usw. Dieses Sicherheitsprofil ist folglich mit einem höheren Sicherheitsstandard verbunden, aber auf der anderen Seite wird eine Firewall auch selektiver und könnte damit auch den erlaubten Datenverkehr mehr behindern, eine Netzwerk- und Prozessorperformance würde sinken und möglicherweise wird eine größere Nummer an sogenannten "false positives" erzeugt. Letzteres führt zu einem höheren Aufwand und möglichweise auch zu überflüssigen Benutzereingriffen.

Während das zuletzt geschilderte Beispiel nur zwei unterschiedliche Sicherheitsprofile kennt, sind in der Praxis eine weitaus größere und komplexere Auswahl an Sicherheitsprofilen und Sicherheitsstufen mit teils überlappenden Maßnahmen möglich.

Das Modul SPO verwaltet, wie bereits beschrieben, eine Anzahl von Sicherheitsprofilen, zusammen mit den korrespondierenden Schutzmaßnahmen, wozu beispielsweise sogenannte "Konfigurationsdateien" verwendet werden.

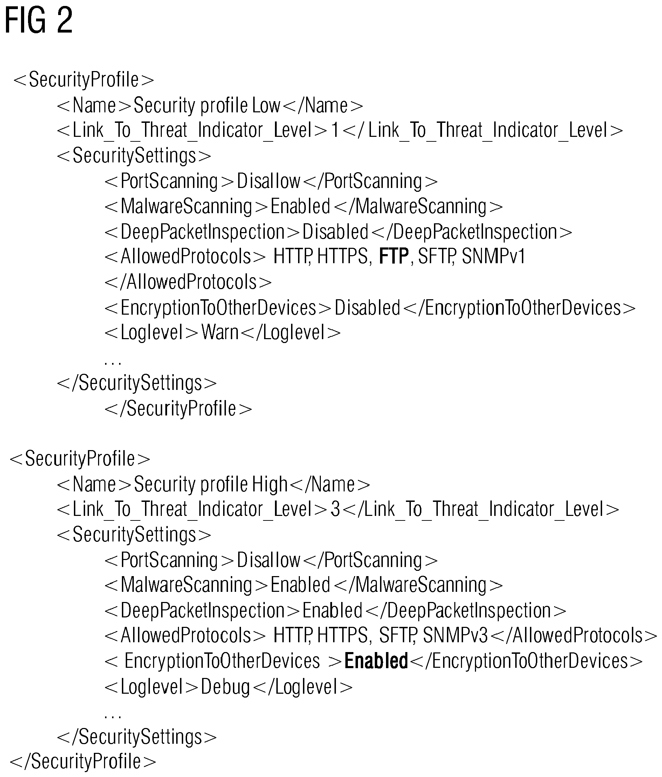

Die Figur 2 zeigt eine solche einfache Konfigurationsdatei, die zwei verschiedene Sicherheitsprofile "Security Profile Low" und "Security Profile High" definiert und verwaltet; die beiden Sicherheitsprofile sind in der entsprechenden Konfigurationsdatei nacheinander definiert.

Das im oberen Teil der Figur 2 dargestellte Sicherheitsprofil unterscheidet sich in einigen Punkten bzw. Schutzmaßnahmen von dem im unteren Teil gezeigten strengeren bzw. aufwändigeren Sicherheitsprofil. Das niedrigere Sicherheitsprofil "Security Profile Low" erlaubt beispielsweise als "allowed protocol" die Verwendung des File-Transfer-Protokolls FTP, welches bei dem strengeren Sicherheitsprofil "Security Profile High" in der Liste der erlaubten Protokolle fehlt. Das höhere Sicherheitsprofil sieht auch eine verschlüsselte Datenübertragung zu anderen Komponenten vor (EncryptionToOtherDevices: Enabled), während das bei dem niedrigen Sicherheitsprofil nicht der Fall ist. Andere unterschiedliche Maßnahmen betreffen beispielsweise die Aufzeichnung von Ereignissen (Loglevel) und die Untersuchung von Datenpaketen (DeepPacketInspection).

Die in der Figur 2 dargestellten Sicherheitsprofile sind dabei unterschiedlichen Maßen bzw. Indices für eine Cyberkriminelle Bedrohungslage zugeordnet, wobei das Sicherheitsprofil "Security Profile Low" einem Bedrohungslevel "1" (Link_To_Threat_Indicator_Level: 1) zugewiesen ist, während das Sicherheitsprofil "Security Profile High" der Bedrohungsstufe "3" zugeordnet ist. Bezüglich der Bedrohungsstufen ist es jedoch in der Praxis auch möglich, nicht nur einfache Stufen zu beschreiben, sondern auch komplexere Informationen zu verwerten, die insbesondere auf unterschiedliche Szenarien wie z. B. Bedrohung durch Viren, Bedrohung durch Phishing, Bedrohung durch Portangriffe usw. bezogen sind. Auch branchen- oder technologiebezogene Bedrohungsinformationen sind erfindungsgemäß verwertbar, jedoch in den einfachen Ausführungsbeispielen aus Gründen der Übersichtlichkeit nicht näher ausgeführt.

## Patentansprüche

1. Verfahren zur Steuerung von Schutzmaßnahmen eines Computers (ICS1, ..., ICS3),
insbesondere einer Komponente einer industriellen Automatisierungsanordnung,
wobei eine Anzahl Schutzmaßnahmen zum Schutz gegen cyberkriminelle Bedrohungen, insbesondere gegen Computerviren und andere Angriffe, verfügbar ist,
**dadurch gekennzeichnet,**
**dass** die verfügbaren Schutzmaßnahmen einer Anzahl von Sicherheitsprofilen zugeordnet sind,
**dass** für den Computer (ICS1, ..., ICS3) ein Maß für eine cyberkriminelle Bedrohung ermittelt wird,
**dass** anhand des ermittelten Maßes zumindest eines der Sicherheitsprofile ausgewählt wird, und
**dass** die dem ausgewählten Sicherheitsprofil zugeordneten Schutzmaßnahmen auf den Computer (ICS1, ..., ICS3) angewendet werden.

2. Verfahren nach Patentanspruch 1,
**dadurch gekennzeichnet,**
**dass** das Maß für die cyberkriminelle Bedrohung von als eine Anzahl von Werten beschrieben wird,
wobei die einzelnen Werte jeweils einen Typ oder eine Art der Bedrohung quantifizieren.

3. Verfahren nach einem der vorhergehenden Patentansprüche,
**dadurch gekennzeichnet,**
**dass** die cyberkriminelle Bedrohung von einem Dienst (TIS) ermittelt und an den Computer (ICS1, ..., ICS3) gemeldet oder von dem Computer (ICS1, ..., ICS3) bei diesem Dienst (TIS) abgerufen wird.

4. Verfahren nach Patentanspruch 3,
**dadurch gekennzeichnet,**
**dass** der Computer (ICS1, ..., ICS3) Meldungen über die cyberkriminelle Bedrohung von zumindest einem Dienst (TIS) abonniert.

5. Verfahren nach einem der Patentansprüche 3 oder 4,
**dadurch gekennzeichnet,**
**dass** durch den Computer (ICS1, ..., ICS3) aus einer Anzahl von Werten für eine cyberkriminelle Bedrohung aus unterschiedlichen Quellen oder Diensten (TIS) ein zumindest erforderliches Sicherheitsprofil bestimmt.

6. Verfahren nach einem der vorhergehenden Patentansprüche,
**dadurch gekennzeichnet,**
**dass** bei der Auswahl des anzuwendenden Sicherheitsprofils auch eine aktuelle Auslastung des Computers (ICS1, ..., ICS3) berücksichtigt wird,
wobei bei einer geringen Auslastung ein höheres Sicherheitsprofil eingestellt wird und umgekehrt.

7. Verfahren nach einem der vorhergehenden Patentansprüche,
**dadurch gekennzeichnet,**
**dass** zumindest zwischen einem niedrigen Sicherheitsprofil mit wenig aufwändigen Schutzmaßnahmen und einem hohen Sicherheitsprofil mit aufwändigeren Schutzmaßnahmen unterschieden wird.

8. Computer (ICS1, ..., ICS3),
insbesondere Komponente einer industriellen Automatisierungsanordnung,
mit einer Anzahl verfügbarer Schutzmaßnahmen gegen cyberkriminelle Bedrohungen, insbesondere gegen Computerviren und andere Angriffe,
**dadurch gekennzeichnet,**
**dass** die verfügbaren Schutzmaßnahmen einer Anzahl von Sicherheitsprofilen zugeordnet sind,
**dass** der Computer (ICS1, ..., ICS3) zur Berücksichtigung eines Maßes für eine cyberkriminelle Bedrohung eingerichtet ist,
wobei der Computer (ICS1, ..., ICS3) dazu eingerichtet ist, anhand des Maßes für die cyberkriminelle Bedrohung zumindest eines der Sicherheitsprofile auszuwählen,
wobei eine Anzahl Sicherheitsprofile vorgesehen ist, und
**dass** der Computer (ICS1, ..., ICS3) zur Anwendung der dem jeweils ausgewählten Sicherheitsprofil zugeordneten Schutzmaßnahmen eingerichtet ist.
